(19)

Europäisches
Patentamt
European
Patent Office
Office européen
des brevets

(11) **EP 2 438 823 A1**

(12) **EUROPEAN PATENT APPLICATION**
published in accordance with Art. 153(4) EPC

(43) Date of publication:
**11.04.2012 Bulletin 2012/15**

(21) Application number: **10783490.5**

(22) Date of filing: **03.06.2010**

(51) Int Cl.:
*A23L 1/31* (2006.01)     *A23L 1/314* (2006.01)
*A23L 1/317* (2006.01)

(86) International application number:
**PCT/JP2010/059806**

(87) International publication number:
**WO 2010/140708 (09.12.2010 Gazette 2010/49)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **05.06.2009 JP 2009136392**

(71) Applicant: **Ajinomoto Co., Inc.
Tokyo, 104-8315 (JP)**

(72) Inventor: **KODERA, Tomohiro
Kawasaki-shi
Kanagawa 210-8681 (JP)**

(74) Representative: **Strehl Schübel-Hopf & Partner
Maximilianstraße 54
D-80538 München (DE)**

(54) **ENZYME PREPARATION FOR REFORMING PROCESSED MEAT PRODUCTS AND
MANUFACTURING METHOD FOR PROCESSED MEAT PRODUCTS**

(57)     By using phospholipase C and/or phospholipase D when producing a processed meat product, water content released while the processed meat product is stored can be suppressed without adversely affecting the texture, such as the hardness and flexibility, of the processed meat product.

EP 2 438 823 A1

**Description**

Technical Field

The present invention relates to enzyme preparations for modifying a processed meat product, and to a method for manufacturing a processed meat, for use in suppressing water separation from a processed meat product.

Background Art

Processed meat products such as hams and sausages are processed food that contains non-meat components. Such processed meat products have become indispensable in our dietary life for a number of reasons, including convenience, broad utility, and uniformity in mass production. These products are typically distributed by being refrigerated. However, there are cases where the components added with the meat raw material cause water separation during the distribution of the refrigerated products. This is not a small problem.

Various techniques have been developed to suppress such water separation. For example, methods that use modified egg white are known as the technique that makes use of protein (JP-A-2008-086306, JP-A-2008-035811). There is also a report of a method that uses salts, specifically a method that uses 8 to 43% of sodium carbonate and/or sodium bicarbonate, 3 to 20% of potassium chloride, amino acids, and sodium chloride (JP-A-2007-312771). Various other techniques that use other materials are known, including a method that uses a cassia gum and other food materials (JP-A-2006-223189), a method that adds puffed cereals (JP-A-2006-006236), a method that uses a pickle solution that contains a reversibly thermoresponsive galactoxyloglucan obtained by the partial enzymatic removal of the side chain galactose of galactoxyloglucan (JP-A-2004-180550), a method that uses a complex of fine cellulose and semipurified carrageenan (JP-A-11-046723), a method that uses trehalose (JP-A-09-056342), a method that uses an emulsion of dry vegetable and a polysaccharide thickener (JP-A-08-084573), a method that uses a gelled material as a mixture of gel-forming edible hydrocolloid (EH) and edible filamentous fungus (EFF) (JP-A-10-511857), a method that uses a complex of fine cellulose and gelatinizer (Domestic Re-publication of PCT international application, 98/017126), a method that uses a whey protein-containing solution, and a whey protein gelled material that uses the whey protein-containing solution (Japanese Patent No. 2529052), and a method that uses an alginic acid ester (JP-A-2002-281942). Specifically, JP-A-2002-281942 describes co-use of alginic acid ester with an enzyme, which is described as being amylase, invertase, catalase, cellulase, papain, protease, pectinase, lysozyme, lipase, trypsin, pancreatin, bromelain, pepsine, peptidase, or actinidin. However, the publication does not specifically describe any effect that results from using alginic acid ester and an enzyme together. Rather, it merely represents a general description concerning technical possibility. Techniques that provide water-separation suppressing effects through improvements in production steps are also available. For example, a method is known in which raw materials are highly homogenized through mixing with an ultra high-speed centrifugal mixer (JP-A-2005-261351).

There are some reports of food modifying techniques using lipase. Examples include improving egg quality with phospholipase A2 (US Patent No. 4,034,124, Dutihl & Groger 1981 J. Sci. Food Agric. 32, 451-458), a method that uses esterase, lipase, and phospholipase to improve the stability of an acidic oil-in-water emulsion composition (JP-A-2004-201672), a method that uses lipase for production of a freeze-resistant egg white composition (JP-A-2000-014358), a method that adds a lipase treatment in a gelatin producing step to prevent water separation while thawing a frozen food, and to thus prevent damage caused by freezing (JP-A-11-164655), a method that performs a lipase treatment in a fish gelatin powder producing step for the prevention of water separation in frozen food (Japanese patent No. 2985953), a method that adds lipase to a dough to improve the aging effect (EP05859888), a method that adds lipase to a dough to improve tenderness without adding additional fat/oil to the dough (WO94/04035), a method that improves a bread volume with exogenous lipase (Castello, P. ESEGP 89-10 Dec. 1999 Helsinki), and a method that improves the quality of fried products with phospholipase and galactolipase (JP-A-2009-65984). There are many other reports concerning the flavor enhancing effect for dairy products such as cheese.

Aside from lipase, the action of other lipid-modifying enzymes on physical properties is reported, as in the use of lipid acyltransferase (WO2004/064537, WO2005/066347). According to these patents, the use of lipid acyltransferase with high transfer activity in combination with an emulsifier improves the effect of modifying the physical properties of food compared to lipase, and such modifying effects are reported in dairy products, bread, frozen dough, noodle, whip cream, chocolate, and in processed meat products. However, the use of lipase is described to increase free fatty acid, and thus as being unsuitable for modifying the physical properties of food. Although a weak degradative activity is confirmed in the enzymes described in the foregoing patents, the activity is the phospholipase A2 activity (or phospholipase A1 activity), not the phospholipase C or phospholipase D activity. It is therefore not possible to draw analogy to the functions of phospholipases C and D.

JP-A-58-152481, JP-A-2006-223119, and JP-A-2006-180738 describe the basic properties of phospholipase C or D. However, these publications do not describe anything about the use for processed meat products. Further, there are no reports of phospholipase C or D being effective in suppressing water-separation, maintaining physical properties such as hardness and flexibility, and modification in processed meat products.

Disclosure of the Invention

The present invention provides an enzyme preparation for modifying a processed meat product, and a method for manufacturing a processed meat product, whereby the water-separation during the storage can be suppressed without deteriorating the texture, such as hardness and flexibility, of the processed meat product.

The present inventor conducted intensive studies, and found that phospholipases C and D can be used to suppress the water separation during the storage without deteriorating the texture, such as hardness and flexibility, of the processed meat products. The present invention has been completed based on this finding. Specifically, the present invention includes the following.

(1) An enzyme preparation for modifying a processed meat product, which comprises phospholipase C and/or phospholipase D.

(2) A method for producing a processed meat product, wherein phospholipase C and/or phospholipase D are allowed to act on a meat raw material.

(3) The method according to (2), wherein the amount of phospholipase C and/or phospholipase D that act on the meat raw material is in a range of 0.0005 to 0.05 g per 100 g of the meat raw material.

(4) The method according to (2), wherein the amount of phospholipase C and/or phospholipase D that act on the meat raw material is in a range of 15 to 1,500 units per 100 g of the meat raw material.

(5) The method according to (2), wherein the processed meat product is a ham, a sausage, a hamburger steak, a meat loaf, or a meatball.

The present invention is described below in detail.

The enzyme preparation for modifying a processed meat product of the present invention contains phospholipase C and/or phospholipase D. Phospholipase is an enzyme that hydrolyzes phospholipids, and is broadly classified into A1, A2, C, and D. The present invention uses phospholipase C and/or phospholipase D. The enzyme preparation of the present invention may contain bulking agents for food, in addition to phospholipase C and phospholipase D. The bulking agents for food may be common bulking agents for food, such as lactose, maltitol, sorbitol, dextrin, glucose, starches, polysaccharides, gums, and pectin. Substrate components of phospholipase and enzyme activity stimulators also may be contained to help increase in the enzyme activity. In addition to the bulking agents, the enzyme preparation of the present invention may also appropriately contain other materials, including food protein materials such as egg white and soy protein, seasonings, common salts, sugar, colorants, color producing agents, erythorbic acid and salts thereof, and emulsifiers, as required. The use of such auxiliary agents can impart functions of improving the stability and dispersibility of the enzyme preparation, and of preventing dusting.

The method of the present invention for manufacturing a processed meat product is characterized that the phospholipase C and/or phospholipase D are allowed to act on a meat raw material.

The meat raw material used in the present invention includes any type of meat considered as edible meat. Non-limiting examples include beef, pork, horse meat, mutton and lamb, goat meat, domestic rabbit meat, chicken, turkey, duck, goose meat, and Japanese quail meat.

The processed meat products of the present invention collectively refer to processed products made from minced meat used as the main raw material, and include, for example, sausage, ham, hamburger steak, meat loaf, and meatball. The producing methods of these products *per se* are known to a skilled artisan. In principle, the production involves kneading minced meat with a common salt, dissolving out salt-soluble proteins, kneading and shaping the meat, and heating and gelling the meat product. Here, starch and various other auxiliary raw materials, including seasonings, spices, and color producing agents are appropriately added.

The phospholipase C and/or phospholipase D may be added at any time in the kneading step. Preferably, these are added during the kneading step after adding a common salt, because it produces a more elastic product.

The phospholipase C and/or phospholipase D that act on the meat raw material are used in an amount of preferably 0.0005 g to 0.05 g, more preferably 0.001 to 0.01 g per 100 g of the meat raw material, or, preferably 15 to 1,500 units, more preferably 30 to 300 units per 100 g of the meat raw material.

The phospholipase C activity is measured according to the following method. First, 0.9 ml of a first reaction reagent mixture is accurately dispensed into a small test tube, and preliminarily heated at 37°C. After 5 minutes, an enzyme sample solution (100 μl) is accurately added and mixed to start a first reaction at 37°C. After 10 minutes, a reaction stop solution (1 ml) is added and mixed, and, immediately, 1 ml of a second reaction reagent mixture is added and mixed to start a second reaction at 37°C. For blinding, 100 μl of an enzyme sample solution is added at this stage. After 20 minutes, absorbance at 500 nm is measured. The measured absorbance is "As" for the sample solution, and "Ab" for the blind solution. When $\Delta A = (As - Ab) \leq 0.30$ Abs, the activity can be calculated as follows.

$$Activity\ (U)\ =\ (\Delta A/10)/12.0\ \times\ 3.00/0.10$$

.

12.0: Millimole molecular extinction coefficient of quinonimine dye at 500 nm
10: Enzyme reaction time (min)
3.00: Total reaction liquid volume (ml)
0.10: Enzyme sample solution volume used for the reaction (ml)

Note that the first reaction reagent mixture is a composition as a mixture of 0.2 M DMG-NaOH buffer (pH 7.5; 0.2 ml), 10 mM egg-yolk lecithin solution (0.2 ml), and purified water (0.5 ml). The 10 mM egg-yolk lecithin solution is a homogenous solution prepared by removing egg-yolk lecithin (100 mg) with ether, and adding 13.5 ml of a 0.5% DOC solution to the resulting product dried with a rotary evaporator under reduced pressure. The 0.5% DOC solution is a solution prepared by suspending deoxycholic acid in purified water (40 ml), dissolving it with 4M NaOH added thereto so as to have a pH of about 8.0, and adjusting the total volume to 50 ml with purified water. The second reaction reagent mixture is a mixture of 15 mM 4-AA solution (0.1 ml), 0.2% (W/V) phenol solution (0.1 ml), 30 U/ml COD solution (0.1 ml), 90 U/ml POD solution (0.1 ml), 80 U/ml ALP solution, and 50 mM tris-HCl buffer (pH 8.0; 0.5 ml). The reaction stop solution is a 1 M tris-HCl buffer (pH 8.0) that contains 0.2% (W/V) sodium dodecyl sulfonate. A 10 mM DMG-NaOH buffer (pH 7.5) containing 0.1% (W/V) BSA was used as the enzyme dissolving and diluting solution.
The phospholipase D activity is measured according to the following method. First, 0.5 ml of a first reaction reagent mixture is accurately dispensed into a small test tube, and preliminarily heated at 37°C. After 5 minutes, an enzyme sample solution (50 μl) is accurately added and mixed to start a first reaction at 37°C. After 10 minutes, a second reaction reagent mixture (2.5 ml) is added and mixed to start a second reaction at 37°C. For blinding, 50 μl of an enzyme sample solution is added at this stage. After 20 minutes, absorbance at 500 nm is measured. The measured absorbance is "As" for the sample solution, and "Ab" for the blind solution. When $\Delta A = (As - Ab) \leq 0.40$ Abs, the activity can be calculated as follows.

$$Activity\ (U)\ =\ (\Delta A/10)/12.2\ \times\ 3.05/0.05$$

12.2: Millimole molecular extinction coefficient of quinonimine dye at 500 nm
10: Enzyme reaction time (min)
3.05: Total reaction liquid volume (ml)
0.05: Enzyme sample solution volume used for the reaction (ml)

Note that the first reaction reagent mixture is a composition as a mixture of 0.1 M tris-HCl buffer (pH 8.0; 20 ml) , 0.1 M calcium chloride solution (0.05 ml), 25 mM substrate solution (0.1 ml), and purified water (0.15 ml). The substrate solution is a solution of dioleoylphosphatidylcholine (88.5 mg) in 5% (W/V) Triton X-100 solution (4.5 ml). The second reaction reagent mixture is a mixture of 15 mM 4-AA solution (0.1 ml), 0.2% (W/V) phenol solution (0.1 ml), 60 mM EDTA solution (pH 8.0; 0.1 ml), 50 mM tris-HCl buffer (pH 8.0; 2 ml), 90 U/ml POD solution (0.1 ml), and 30 U/ml COD solution (0.1 ml). A 10 mM tris-HCl buffer (pH 8.0) containing 0.05% (W/V) BSA and 0.1% (W/V) Triton X-100 was used as the enzyme dissolving and diluting solution.
The enzyme reaction can be expected to exhibit effects, either in short reaction time or long. For example, it is sufficient to provide 0.05 to 48 hours at 0 to 60°C in the processed meat product producing process. It should also be noted that the enzyme is considered to be deactivated by the heat of the processed meat product producing process, and there is no remaining activity in the final product.

Brief Description of the Drawings

Fig. 1 is a diagram showing the comparison of the percentages of water separation in sausage according to Example 1 of the present invention.

Fig. 2 is a diagram showing the comparison of sausage hardness according to Example 1 of the present invention.

Fig. 3 is a diagram showing the comparison of sausage flexibility according to Example 1 of the present invention.

Fig. 4 is a diagram showing the comparison of the percentages of water separation in ham according to Example 2 of the present invention.

Fig. 5 is a diagram showing the comparison of the flexibility of ham according to Example 2 of the present invention.

Fig. 6 is a diagram showing the comparison of the breaking stress of ham according to Example 2 of the present invention.

Best Mode for Carrying Out the Invention

The present invention is described in more detail below based on Examples. The present invention is in no way limited by the following Examples.

Example 1

1.5 weight parts of common salt was added to 82 weight parts of a frozen short loin of pork processed with a 3-mm plate, and the meat was thoroughly stirred with a Stephan cutter. To the mixture were then added 0.3 weight parts of polyphosphare, 0.1 weight parts of sodium ascorbate , 0.01 weight parts of sodium nitrite, 0.2 weight parts of seasoning ("I-7", Aj inomoto Co., Inc.), water to make the final total 100 weight parts, and the predetermined amount of the enzyme presented in Table 1. The mixture was then stirred with a Stephan cutter to make the final product temperature 10°C or less. The kneaded meat so obtained was degassed in a vacuum, filled into a casing, and heat-treated in a constant-temperature vessel (at 60 degrees for 30 min, and then at 75°C for 30 min). The meat was quickly cooled, and stored in a refrigerator for 7 days. An enzyme-free sausage was used as a control.

Table 1

| Enzymes and amounts added | | | |
|---|---|---|---|
| No. | Enzyme | Manufacturer | Amount added with respect to meat (%) |
| 1 | Lipase G (lipase) | Amano Enzyme Inc. | 0.25 |
| 2 | Lipase R (lipase) | Amano Enzyme Inc. | 0.25 |
| 3 | Sumizyme RO (lipase) | Shin-Nihon Chemical | 0.5 |
| 4 | Palatase (lipase) | Novozymes | 0.25 |
| 5 | Phospholipase A1 | MFC Lifetech | 0.05 |
| 6 | PLA2 Nagase (phospholipase A2) | Nagase ChemteX Corporation | 0.05 |
| 7 | PLC (phospholipase C) | Asahi Kasei | 0.0025 |
| 8 | PLC (phospholipase D) | Asahi Kasei | 0.0025 |
| 9 | Activa TG-S (transglutaminase) | Ajinomoto Co., Inc. | 0.4 |

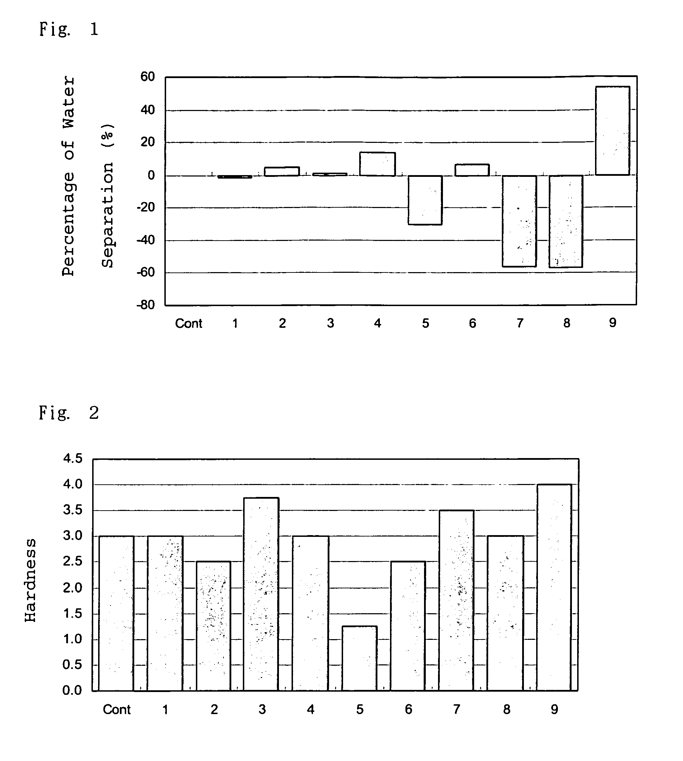

The stored sample sausage was taken out of the casing after 7 days, and the moisture was wiped off. A weight reduction from the weight before wiping was regarded as the amount of water separation, and the ratio with respect to the amount of water separation in the control was determined. The ratio was positive when the amount of water separation was greater than that of the control. In other words, if the percentage of water separation ratio shows negative, it has the water-separation suppressing effect. The results were shown in Fig. 1.

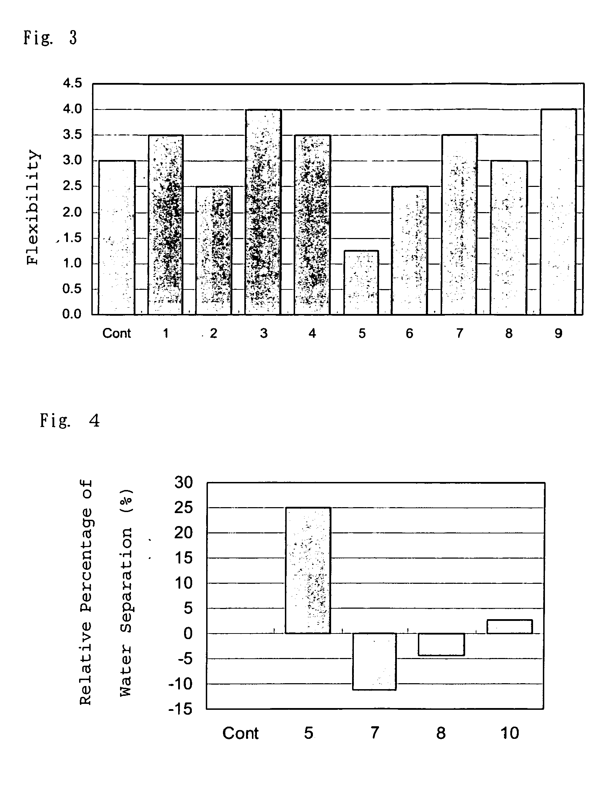

Hardness and flexibility were also measured by sensory evaluations. Evaluations were made by five panelists trained to evaluate the sensory attributes of meat products. The samples were evaluated in the scale of 1 to 5, 3 being the score of the control. The results were shown in Fig. 2 (hardness) and in Fig. 3 (flexibility).

The water-separation suppressing effect was confirmed in phospholipase A1, phospholipase C, and phospholipase D. However, the sensory evaluations revealed decreases in hardness and flexibility in phospholipase A1, suggesting a quality deterioration in physical property. On the other hand, there was no such decrease in phospholipase C and phospholipase D, apparently showing the presence of the water-separation suppressing effect.

Example 2

Auxiliary raw materials and water were weighed according to the formulation shown in Table 2, and mixed with a mixer to prepare a basic pickle. 100 weight parts of a pork leg after removing fat to leave only lean meat was tenderized once on each side with a sinew cutter, and minced with an 8 mm-hole plate. Then, 110 weight parts of the pickle prepared according to the formulation of Table 2 was added to 100 weight parts of the meat, followed by tumbling at 5°C with a tumbler (for a total of 16 hours in a cycle of 15-min rotation at 90 rpm and 15-min rest). The resulting meat was used as salted meat. After mixing 5 weight parts of a milk protein (Super Rakuto #1) with 95 weight parts of the salted meat, the meat was cut with a silent cutter to prepare a binder. Then, 60 weight parts of the salted meat, 35 weight parts of the binder, and 5 weight parts of a potato starch (*Nisshoku Ginrei*) were mixed with a Hobart mixer for 3 minutes. Here, the enzyme No.5 (phospholipase A1), No.7 (phospholipase C), and No.8 (phospholipase D) with the confirmed effect in Example 1 were added from among the enzymes of Table 1. An enzyme-free sample was used as a control. For comparison, enzyme No.10 (transglutaminase) was also used. The meat was then filled into vinylidene chloride (a diameter of 12.2 cm in the filling step), tied, and heated. Heating was performed in a constant-temperature vessel at 60°C for 2 hours, and for another 2 hours at 80°C (the center temperature reaching 72°C). The heated meat was rapidly cooled with cold water, and sliced into a 1.2-mm thickness. The slices were vacuum-packed (about 100 g/pouch), and stored at 5°C.

Table 2

| Formulation of auxiliary raw materials | |
|---|---|
| Raw material | Formulation Ratio (%) |
| Soy protein <New Fujipro 1700> | 4 |
| Egg protein <powder egg white> | 4.5 |
| Milk protein <Super Lacto #1 > | 3.5 |
| Common salt <Nakuru M> | 2.65 |
| Polphosphate preparation <Polygon C> | 0.95 |
| Sodium ascorbate <food additive> | 0.1 |
| Sodium nitrite <food additive) | 0.03 |
| Sodium glutamate | 0.5 |
| glutinous starch syrup <Amamiru> | 12 |
| Cochineal dye <Sun Red> | 0.01 |
| Adjusting water | 71.76 |
| Total | 100 |

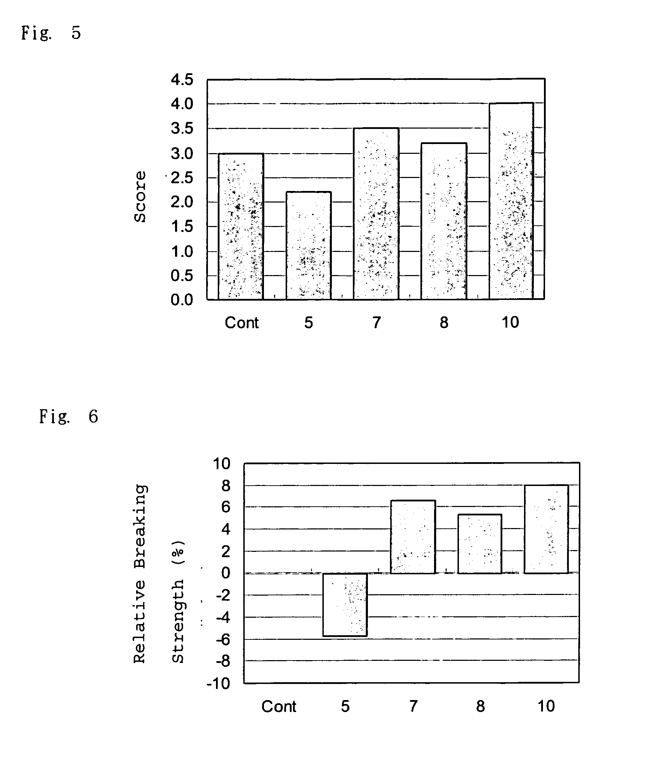

The stored ham samples were taken out of the casing after 7 days, and the moisture was wiped off. A weight reduction from the weight before wiping was regarded as the amount of water separation, and a ratio with respect to the amount of water separation in the control was determined. The ratio was positive when the amount of water separation was greater than that of the control. In other words, if the percentage of water separation ratio shows negative, it has the water-separation suppressing effect. The results were shown in Fig. 4. The results confirmed the water-separation suppressing effect in the enzymes phospholipase C and phospholipase D. From the results of sensory evaluation (Fig. 5) and physical property evaluation (Fig. 6), the phospholipase C and phospholipase D were shown to have the effect of imparting hardness and flexibility as with the transglutaminase. These results thus also confirmed that the phospholipase C and phospholipase D had the physical property improving effect and the water-separation suppressing effect. On the other hand, the water-separation suppressing effect and the physical property improving effect were not confirmed in phospholipase A1 in their application to ham.

Industrial Applicability

The present invention relates to a quality improving agent for products such as processed meat products, intended to suppress water separation during the storage of processed meat products, and to a method for manufacturing a processed meat product using the improving agent. The invention realizes both quality improvement and effective use, and is thus highly useful in the field of food processing.

**Claims**

1. An enzyme preparation for modifying a processed meat product, which comprises phospholipase C and/or phospholipase D.

2. A method for producing a processed meat product, wherein phospholipase C and/or phospholipase D are allowed to act on a meat raw material.

3. The method according to claim 2, wherein the amount of phospholipase C and/or phospholipase D that act on the meat raw material is in a range of 0.0005 to 0.05 g per 100 g of the meat raw material.

4. The method according to claim 2, wherein the amount of phospholipase C and/or phospholipase D that act on the meat raw material is in a range of 15 to 1,500 units per 100 g of the meat raw material.

5. The method according to claim 2, wherein the processed meat product is a ham, a sausage, a hamburger steak, a meat loaf, or a meatball.

Fig. 1

Fig. 2

Fig. 3

Fig. 4

Fig. 5

Fig. 6

## INTERNATIONAL SEARCH REPORT

| | International application No. |
|---|---|
| | PCT/JP2010/059806 |

**A. CLASSIFICATION OF SUBJECT MATTER**
*A23L1/31*(2006.01)i, *A23L1/314*(2006.01)i, *A23L1/317*(2006.01)i

According to International Patent Classification (IPC) or to both national classification and IPC

**B. FIELDS SEARCHED**

Minimum documentation searched (classification system followed by classification symbols)
A23L1/31, A23L1/314, A23L1/317

Documentation searched other than minimum documentation to the extent that such documents are included in the fields searched

Electronic data base consulted during the international search (name of data base and, where practicable, search terms used)
CA/BIOSIS/MEDLINE/WPIDS(STN), JSTPlus/JMEDPlus/JST7580(JDreamII),
Science Direct

**C. DOCUMENTS CONSIDERED TO BE RELEVANT**

| Category* | Citation of document, with indication, where appropriate, of the relevant passages | Relevant to claim No. |
|---|---|---|
| X | DACARANHE C.D. & TERAO J., Effect of Cabbage Phospholipase D Treatment on the Oxidative Stability of Beef Homogenate and Egg Yolk Phosphatidylcholine Liposomes., J. Food Sci. (2002) vol. 67, pages 2619-2624, particularly, page 2619, 'ABSTRACT' | 1-5 |

☐ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 September, 2010 (01.09.10) | 14 September, 2010 (14.09.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008086306 A
- JP 2008035811 A
- JP 2007312771 A
- JP 2006223189 A
- JP 2006006236 A
- JP 2004180550 A
- JP 11046723 A
- JP 9056342 A
- JP 8084573 A
- JP 10511857 A
- JP 10017126 W
- JP 2529052 B
- JP 2002281942 A
- JP 2005261351 A
- US 4034124 A
- JP 2004201672 A
- JP 2000014358 A
- JP 11164655 A
- JP 2985953 B
- EP 05859888 A
- WO 9404035 A
- JP 2009065984 A
- WO 2004064537 A
- WO 2005066347 A
- JP 58152481 A
- JP 2006223119 A
- JP 2006180738 A

**Non-patent literature cited in the description**

- **Dutihl ; Groger.** *J. Sci. Food Agric.,* 1981, vol. 32, 451-458
- **Castello, P.** *ESEGP,* December 1999, 89-10